# FASCICULE DE BREVET EUROPEEN

(11) **EP 4 001 859 B1**
(45) Date de publication et mention de la délivrance du brevet: **09.10.2024**
(21) Numéro de dépôt: 21209189.6
(22) Date de dépôt: 19.11.2021
(51) Int. Cl.: G01F 23/263, G01F 23/284, G01F 23/2962, G01F 23/80, G05B 23/02, G01F 23/14, G01F 23/18

(54) **PROCÉDÉ DE TRAITEMENT D'UN SIGNAL DE MESURE POUR OBTENIR UNE SIGNATURE ET DISPOSITIF DE MESURE ASSOCIÉ**
VERFAHREN ZUR VERARBEITUNG EINES MESSSIGNALS ZUR ERSTELLUNG EINER SIGNATUR, UND ENTSPRECHENDE MESSVORRICHTUNG
METHOD FOR PROCESSING A MEASURING SIGNAL TO OBTAIN A SIGNATURE AND ASSOCIATED MEASURING DEVICE

(30) Priorité: 19.11.2020 FR 2011876
(43) Date de publication de la demande: 25.05.2022
(73) Titulaire: Ijinus, 29300 Mellac (FR)
(72) Inventeur: Le Strat, Olivier, 29000 Quimper (FR); Le Gac, Arnaud, 29380 Le Trevoux (FR); Zug, Mathieu, 44170 Vay (FR); Treguier, Yoann, 29300 Redene (FR)
(74) Mandataire: Jacobacci Coralis Harle

(56) Documents cités:
- EP-A2- 2 820 390
- WO-A1-2018/209266
- US-A1- 2016 109 492
- US-A1- 2016 146 659
- US-A1- 2020 064 823

## Description

### Domaine technique de l'invention

La présente invention concerne un procédé de traitement d'un signal de mesure d'une grandeur physique et un dispositif de mesure d'une grandeur physique mettant en oeuvre ledit procédé.

Elle s'applique, en particulier, aux domaines de l'instrumentation, en particulier l'instrumentation connectée, nécessitant un suivi détaillé des mesures afin de permettre leur interprétation, notamment afin de détecter des anomalies, ainsi que de qualifier la mesure et de vérifier sa pertinence.

### Technique antérieure

Il est connu de l'art antérieur des dispositifs d'instrumentation livrant une mesure finale, éventuellement avec une indication sur la performance de la mesure effectuée.

Il est connu des documents US201646659, WO2018209266, EP2820390, US2020064823 des procédés de traitement d'un signal de mesure d'une grandeur physique par une unité de traitement du signal. Toutefois, ces documents ne précisent pas les éléments nécessaires à une bonne signature de mesure.

Cependant il n'est connu aucun procédé ni dispositif permettant d'interpréter les phénomènes physiques à l'origine d'une mesure de manière simple et rapide pour un utilisateur. Il n'est pas non plus connu de technique permettant de conclure de manière simple de la conformité ou non-conformité d'une mesure, en vue notamment de déclencher des opérations permettant de corriger des anomalies.

### Présentation de l'invention

La présente invention vise à remédier à ces inconvénients avec une approche totalement novatrice.

Plus précisément, l'invention a pour objectif de fournir une technique permettant de stocker des données dont l'historique d'acquisition est disponible pour un utilisateur, de fournir des informations sur la qualité du signal de mesure final, et de fournir un signal détaillé permettant une interprétation du signal de mesure brut tout en gardant une quantité d'informations importante par rapport à ce signal de mesure brut.

En particulier, un objectif de l'invention est de fournir une telle technique permettant d'identifier rapidement les anomalies sur le site du capteur, et de mener des opérations de remédiation à ces anomalies, tel qu'un nettoyage, un étalonnage, un remplacement, etc.

Un autre objectif de l'invention est de juger de la pertinence d'un site de mesure, en mettant en lumière la présence ou non des phénomènes physiques à mesurer. Il est ainsi possible de fournir des mesures représentatives du système métrologique, et permet d'éviter des instrumentations inutiles.

Ces objectifs, ainsi que d'autres qui apparaîtront par la suite, sont atteints, selon un premier aspect, à l'aide d'un procédé de traitement d'un signal de mesure d'une grandeur physique par une unité de traitement du signal comprenant une horloge, comportant les étapes suivantes :
- acquisition du signal de mesure au moyen d'un capteur relié à ladite unité de traitement du signal, ledit signal de mesure étant représentatif d'une valeur de la grandeur physique mesurée, l'unité de traitement du signal comprenant l'horloge, un capteur et un moyen non volatil de stockage de l'information reliés à ladite unité de traitement ;
- traitement du signal de mesure, ledit traitement correspondant à une réduction d'une information contenue dans le signal de mesure, de manière à obtenir un premier signal réduit, ledit premier signal réduit représente une signature numérique du signal de mesure, ledit traitement du signal de mesure pour obtenir la signature numérique comporte les sous étapes suivantes :
   - échantillonnage du signal de mesure brut, soit une transformation d'un ou plusieurs signaux analogiques en un ou plusieurs signaux numériques ;
   - filtrage numérique traitement du signal échantillonné à l'étape précédente pour garder les informations nécessaires et supprimer les éventuels bruits ;
   - lissage des résultats du filtrage numérique pour obtenir un signal lissé ;
   - sélection d'au moins une zone de mesure, avec une zone d'exclusion de mesure, identifiée par comparaison du signal lissé de l'étape précédente avec un signal issu d'une base de données ;
- stockage dudit premier signal réduit traité par les sous étapes précédentes avec une information temporelle dans une base de données et un calcul d'au moins un indicateur du niveau de qualité du signal stocké, ledit niveau étant déterminé par l'unité de traitement du signal en fonction de caractéristiques du signal de mesure.

Grâce à ces dispositions, il est possible de stocker un signal de mesure qualitatif ou quantitatif avec une information comprenant la date d'acquisition de chaque point de mesure. Cet horodatage présente l'avantage de permettre d'associer une mesure réalisée à un instant donné à un événement intervenu à cet instant donné, et ainsi notamment de permettre une évaluation de la validité du point de mesure.

Ainsi la sélection lors des sous étapes permet d'isoler sur la ou les zones du signal lissé qui seront exploitées plus finement pour la future mesure finale.

On précise que l'étape de stockage peut comprendre le stockage du premier signal réduit, avec ou sans le stockage du signal de mesure. Il est également possible de stocker uniquement le stockage du signal de mesure seul.

Il convient de préciser que ce procédé n'est pas systématiquement mis en oeuvre pendant toute la durée de la mesure (qui peut être continue dans certains cas), et peut être déclenché par des événements particuliers, selon des critères prédéfinis.

Il convient de préciser que le signal de mesure peut également être une trame vidéo composée de plusieurs images, ou simplement une ou plusieurs images. Ce type de signal de mesure peut être représentatif d'une grandeur physique dans un grand nombre de cas, tel que par exemple un niveau de liquide identifiable visuellement, l'obstruction d'une conduite, la rupture d'un élément, etc.

De plus, lorsque le signal de mesure est un signal qui n'est pas une image ou une vidéo, alors le premier signal réduit (voire le second signal réduit, introduit ci-après) peut être quant à lui une image ou une vidéo. Par exemple, le graphe d'une valeur du signal mesuré au cours du temps peut être lui-même un signal réduit, c'est-à-dire qu'une image du graphe est réalisée et stockée en tant que premier (ou second) signal réduit.

Il est également possible d'utiliser les données de plusieurs capteurs, c'est-à-dire plusieurs signaux de mesure, afin de les réduire en un signal réduit, pouvant prendre la forme d'une image. Par exemple, un champ de température représenté sous forme d'une carte de chaleur est un signal réduit sous forme d'image, provenant de plusieurs sondes de température (ou d'une seule sonde mobile).

En outre, grâce à ces dispositions, une signature numérique plus détaillée que le simple résultat de la mesure est constitué, et permet notamment de qualifier la mesure finale, de lever le doute sur la qualité de la mesure, et d'optimiser la mesure.

Plus particulièrement, la signature numérique détaillée stockée sous forme de signal réduit est analysé après enregistrement pour :
- Evaluer la qualité ou l'efficacité de l'étalonnage initial, ou d'un étalonnage subséquent, d'un capteur
- Proposer ou réaliser des optimisations de ces étalonnages,
- Lever le doute sur la mesure finale en validant ou invalidant la mesure,
- Détecter des variations normales/anormales des grandeurs physiques mesurées,
- Proposer des actes de maintenance préventifs et curatifs, notamment au niveau du capteur réalisant la mesure,
- En cas d'étalonnage insuffisant, reconstituer sur une période donnée, une nouvelle série de données validées à l'aide du signal réduit stocké.
- Dans certains cas, le remplacement d'un capteur par un autre si le type de capteur retenu initialement sur un site de mesure donné est insuffisant ou inadapté pour mesurer le phénomène physique intéressé.

Enfin, on précise que le terme « une information » peut désigner une partie du signal uniquement, aussi bien que l'intégralité du signal, dans ce second cas « une information » correspond à « l'information » contenue dans le signal. La réduction de « l'information » contenue dans le signal correspondant donc à la réduction du signal dans son entièreté.

L'invention est avantageusement mise en oeuvre selon les modes de réalisation et les variantes exposées ci-après, lesquelles sont à considérer individuellement ou selon toute combinaison techniquement opérante.

Dans un mode de réalisation, l'étape de traitement du signal de mesure est une étape de traitement de série de Fourrier, et/ou de détection de pics dans le signal de mesure.

D'autres traitements numériques connus peuvent être également envisagés, en fonction du signal de mesure et des composantes du signal de mesure à mettre en lumière.

Dans un mode de réalisation, l'étape de traitement du signal de mesure est une étape d'analyse statistique temporelle du signal de mesure.

Grâce à ces dispositions, il est possible de conserver une grande partie de l'information du signal de mesure brut tout en obtenant une information plus facilement et rapidement interprétable.

Grâce à ces dispositions, il est possible de juger rapidement et simplement de la qualité du signal final, afin d'interpréter une mesure qui présenterait une anomalie, ou par exemple pour lancer une opération de maintenance sur un capteur présentant une qualité faible.

Dans un mode de réalisation, le calcul d'un ou des indicateurs de qualité est choisi parmi un rapport signal sur bruit, un pourcentage de saturation, une qualité d'un signal de vitesse.

Dans un mode de réalisation, le procédé comporte en outre l'étape suivante :
- traitement du premier signal réduit, ledit traitement correspondant à une réduction de l'information contenue dans ledit premier signal réduit, de manière à obtenir un second signal réduit.

Grâce à ces dispositions, un signal de mesure final est obtenu, ce second signal réduit étant généralement exploité dans des circonstances normales (notamment pour commander des systèmes en fonction de signaux de mesure), le premier signal réduit, représentant une signature numérique de la mesure brute, étant utilisé en cas de besoin d'interprétation, de vérification, de validation, etc. de la mesure finale.

Dans un mode de réalisation, le second signal réduit est une valeur scalaire.

Dans un mode de réalisation, à l'étape du filtrage, le filtrage numérique est adapté à chaque type de mesure choisi parmi un passe bande et un intégrateur.

Dans un mode de réalisation, à l'étape du lissage, les techniques utilisées sont choisies parmi une interpolation linéaire, filtres de Chebyshev, Butterworth et une transformée de Hilbert.

Ainsi, le second signal réduit est une valeur scalaire représentative de la grandeur physique (par exemple la vitesse d'écoulement dans un canal est représentée par la vitesse moyenne, le premier signal réduit étant une répartition des vitesses mesurées par effet Doppler, permettant de constater une répartition normale (c'est-à-dire gaussienne) des vitesses des particules (bulles d'air, impuretés) mesurées dans le fluide).

Selon un deuxième aspect, la présente invention vise un dispositif de mesure d'une grandeur physique utile pour la mise en oeuvre d'un procédé objet de la présente invention, comprenant une unité de traitement du signal comprenant une horloge, un capteur et un moyen non volatil de stockage de l'information reliés à ladite unité de traitement.

Dans un mode de réalisation pour le procédé ou le dispositif, le capteur est choisi parmi les groupes de capteurs piézoélectriques, ultrasoniques et radar, pouvant être avec ou sans effet Doppler.

Grâce à ces dispositions, un grand nombre de mesures physiques peuvent être réalisés, bien qu'il convienne de préciser que plus largement, tout type de capteur numérique peut être utilisé dans le présent dispositif.

Les avantages, buts et caractéristiques particulières de ce dispositif étant similaires à ceux du procédé objet de la présente invention, ils ne sont pas rappelés ici.

### Brève description des figures

D'autres avantages, buts et caractéristiques de la présente invention ressortent de la description qui suit faite, dans un but explicatif et nullement limitatif, en regard des dessins annexés, dans lesquels :
[Fig. 1] la figure 1 représente un schéma synoptique du procédé objet de la présente invention ;
[Fig. 2] la figure 2 représente un dispositif de mesure objet de la présente invention selon une première variante d'un premier mode de réalisation ;
[Fig. 3] la figure 3 représente un dispositif de mesure objet de la présente invention selon une seconde variante d'un premier mode de réalisation.
[Fig. 4] la figure 4 représente un dispositif de mesure selon le premier cas d'application de la présente invention.
[Fig. 5a] la figure 5a représente le graphe de la mesure brute d'un capteur à ultrason
[Fig. 5b] la figure 5b représente le graphe d'un premier signal réduit d'un capteur à ultrason
[Fig. 5c] la figure 5c représente le graphe d'un second signal réduit d'un capteur à ultrason
[Fig. 6a] la figure 6a représente le graphe de la mesure brute d'un capteur capacitif, ne faisant pas partie de l'invention revendiquée
[Fig. 6b] la figure 6b représente le graphe d'un premier signal réduit d'un capteur capacitif, ne faisant pas partie de l'invention revendiquée
[Fig. 6c] la figure 6c représente le graphe d'un second signal réduit d'un capteur capacitif, ne faisant pas partie de l'invention revendiquée
[Fig. 7] la figure 7 représente un indicateur de qualité associé à un signal d'un capteur.

### Description des modes de réalisation

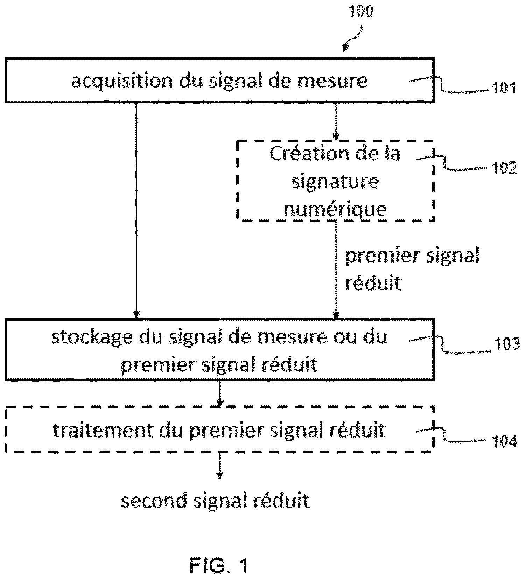

La figure 1 représente un schéma synoptique d'un procédé 100 de traitement d'un signal de mesure d'une grandeur physique selon l'invention. Le procédé 100 qui va être décrit plus en détail par la suite est mis en oeuvre par un dispositif de mesure 200 décrit ci-après.

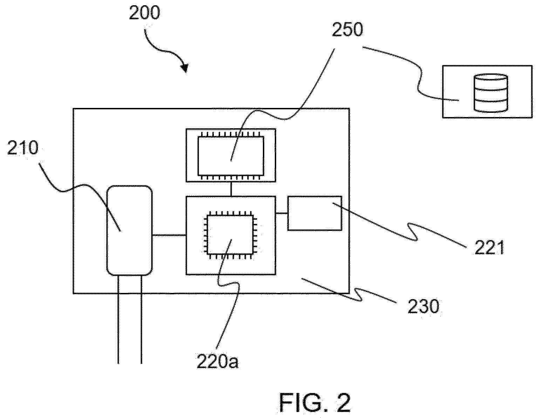

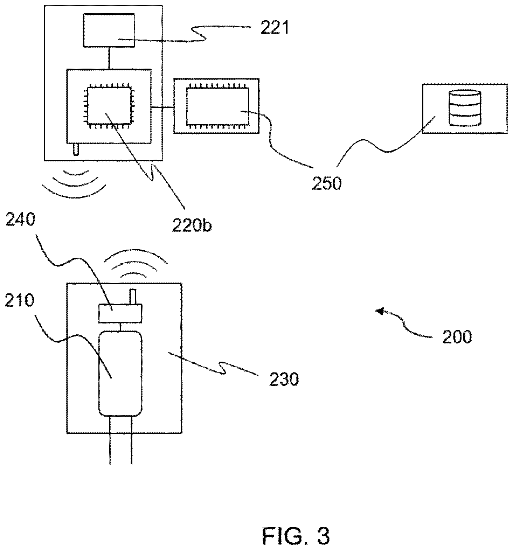

La figure 2 représente le dispositif de mesure 200 comprenant un capteur (ou sonde) 210 relié à une unité de traitement du signal 220, comprenant une horloge 221. Dans cette première variante de réalisation, l'unité de traitement du signal 220a et le capteur 210 sont disposés dans un même boitier 230. Selon une autre variante de réalisation, représentée à la figure 3, l'unité de traitement du signal 220b est située à distance du capteur 210, et un module 240 de communication à distance situé à proximité du capteur 210 et relié à ce dernier permet la communication avec l'unité de traitement du signal 220b.

Selon une variante de réalisation, l'unité de traitement comporte un microcontrôleur qui permet de réaliser le traitement du signal. Le microcontrôleur est relié aux différents éléments pour piloter ou faire des calculs d'étape du procédé décrit.

Selon une variante de réalisation, l'unité de traitement comporte une batterie permettant de réaliser les calculs du procédé localement.

De plus, le dispositif de mesure 200 comprend une base de données 250, qui peut être soit située à proximité du capteur 210, soit à proximité de l'unité de traitement du signal 220b distante du capteur 210, soit à distance du capteur 210 et de l'unité de traitement du signal 220b dans un endroit tiers. La base de données 250 est généralement une mémoire de stockage de l'information non volatile reliée à l'unité de traitement du signal, et peut également prendre la forme d'un serveur de stockage de données distant, dans le troisième cas visé ci-dessus. Les figures 2 et 3 montrent chacune une variante avec une base de données 250 située dans un endroit tiers.

II est compris que les éléments introduits ci-dessus sont soit adaptés à un type de capteur 210 particulier, soit conçus de manière universelle pour s'adapter à un grand nombre de capteurs 210.

En particulier, le dispositif de mesure 200 est adapté pour fonctionner avec des capteurs piézolélectriques, des capteurs ultrasoniques, des capteurs capacitifs, des capteurs radars, et particulier des capteurs radar doppler.

A présent va être abordé le procédé 100 de traitement d'un signal de mesure d'une grandeur physique par l'unité de traitement du signal 220.

Dans une première étape 101, un signal de mesure est acquis au moyen du capteur 210 relié à l'unité de traitement du signal 220, le signal de mesure étant représentatif d'une valeur de la grandeur physique mesurée.

Comme évoqué précédemment, le procédé 100 est adapté pour tout type de capteurs, et en particulier des capteurs piézolélectriques, des capteurs ultrasoniques, des capteurs capacitifs, des capteurs radars, et particulier des capteurs radar doppler.

Dans un premier exemple de mesure, la réception de l'écho d'une onde par un capteur ultrasons est représentative de la distance de l'obstacle ayant renvoyé ledit écho, connaissant l'instant d'émission de l'onde.

La mise en pratique d'un tel exemple se trouve par exemple dans la surveillance de niveau de liquide dans un bassin, notamment un bassin de rétention d'eau, tel que par exemple un déversoir d'orage, un contenant, tel qu'un réservoir de carburant, une cuve, un tuyau ou tout autre élément assimilable, ou encore dans la surveillance de niveau de matière meuble, tel que du grain dans un silo.

Dans un second exemple de mesure, la variation de la capacité électrique du champ électrique entre les deux électrodes d'un capteur capacitif est représentative du type de corps passant entre les électrodes (en particulier de l'eau), en déduisant sa nature grâce à sa constante diélectrique mesurée.

Une application d'un tel exemple peut être trouvé dans la surveillance d'une présence de liquide à proximité du capteur, permettant de surveiller un dépassement de niveau du liquide.

Dans un troisième exemple de mesure, le spectre des fréquences d'un signal radar Doppler est représentatif de la vitesse relative entre un objet et le radar Doppler.

Dans un quatrième exemple, le courant électrique généré par la déformation d'un capteur piézoélectrique est représentatif de la pression exercée sur le capteur, et/ou des vibrations subies par le capteur. Pour la détection de vibrations, des microsystèmes électromécaniques (connus sous l'acronyme « MEMS ») peuvent être également utilisés en tant que capteurs.

Avantageusement, dans une deuxième étape 102, le signal de mesure est traité par l'unité de traitement du signal 220. Ce traitement correspond à une création de ladite signature numérique et ses différentes sous-étapes. Cette signature numérique est certes une réduction du signal brut de part la technique de l'échantillonnage mais représente surtout en enrichissement du signal par l'application de filtres numériques.

Les calculs d'indicateurs de qualité adaptés au procédé représentent aussi un enrichissement du signal.

On précise que le présent procédé peut également omettre la deuxième étape 102, et ne pas produire de premier signal réduit à ce stade du procédé.

L'objectif de ce traitement est d'obtenir un signal plus facilement interprétable que le signal de mesure brut, tout en conservant suffisamment d'informations pour conserver un historique détaillé permettant d'interpréter un signal de mesure final encore plus réduit.

Plus particulièrement, cette première signature numérique est utile pour un utilisateur cherchant à comprendre l'origine d'une anomalie, de vérifier le comportement du capteur, de calibrer/étalonner le capteur, d'effectuer des opérations de maintenance, etc.

Dans le premier exemple de mesure, le traitement du signal est un traitement de série de Fourrier, et/ou une de détection de pics dans le signal de mesure. Il est ainsi possible d'obtenir un écho acoustique simplifié, dans lequel les pics de l'onde acoustique sont rapidement identifiables.

Ainsi, il est par exemple possible d'évaluer la qualité de l'étalonnage du capteur, de lever des doutes sur les mesures finales en cas d'incohérence, et de proposer des actes de maintenances ciblés tels que le nettoyage du capteur.

Dans le second exemple de mesure, le traitement du signal est un calcul de la saturation capacitive du capteur à partir de la valeur capacitive d'une première antenne dite de référence et de la valeur capacitive d'une seconde antenne dite de mesure.

Ce type de mesure est en particulier utile pour détecter la présence d'eau à proximité du capteur.

De cette manière, il est possible d'optimiser l'étalonnage des capteurs situés à des endroits stratégiques et/ou complexes à instrumenter, de déclencher des maintenances préventives, ainsi que de faciliter les opérations de contrôles métrologiques (en priorisant certains sites par exemple).

Dans un troisième exemple de mesure, le traitement du signal est une signature Doppler, calculée statistiquement à partir des plusieurs mesures Doppler.

Il est ainsi possible d'utiliser des critères statistiques (comme l'écart type par exemple) pour qualifier scientifiquement les données et d'optimiser la mesure pour qu'elle soit la plus efficace possible.

Dans le quatrième exemple de mesure, le traitement est une analyse statistique temporelles des mesures.

Cela permet de détecter des variations (normales et/ou anormales) à l'aide de critères statistiques des signaux analogiques, appliqué à des pas de temps très faibles. Il est également possible d'associer des indicateurs simples de maintenance à l'aide d'une telle analyse statistique, afin d'indiquer la nécessité d'une maintenance prochaine.

On comprend que ce premier signal réduit n'est en général pas un signal de mesure final permettant une interprétation directe par un individu ou une machine, mais permet une lecture plus détaillée du signal de mesure final. En particulier, le premier signal réduit n'est pas systématiquement une valeur scalaire, mais peut comprendre également des signaux continus et/ou des séries de valeurs.

Au cours d'une troisième étape 103, le signal de mesure est stocké dans la base de données 250. Ce signal stocké est en général la signature numérique obtenu à l'issue de la deuxième étape 102. Cependant, dans le cas où le procédé 100 ne comprend pas la deuxième étape 102, le signal stocké est le signal de mesure brut.

Au cours de la troisième étape 103, le signal est stocké avec une information temporelle, c'est-à-dire que chaque point de mesure du signal stocké est associé à une date. En d'autres termes, chaque point de mesure est horodaté, de façon à obtenir l'historique de la mesure effectuée.

De plus, il est prévu dans des variantes de ce mode de réalisation le stockage d'un indicateur de niveau de qualité du signal stocké. Ce niveau de qualité est déterminé par l'unité de traitement du signal 220 en fonction de caractéristiques du signal de mesure. On entend par « caractéristiques du signal de mesure » des données intrinsèques du signal, mais également des données relatives aux conditions d'acquisition du signal, ou éventuellement aux conditions de calcul du signal.

L'objectif d'un tel indicateur est de permettre à un utilisateur de juger de façon simple et rapide si le signal de mesure final est fiable ou non. Plus précisément, l'indicateur est par exemple un nombre entier entre 1 et 4, définissant quatre niveaux de qualité, du plus médiocre au plus élevé. Par exemple, dans le cas d'une mesure finale scalaire, telle qu'une vitesse, le niveau de qualité « 1 » correspondrait à une valeur saisie par l'utilisateur en lieu et place d'une valeur mesurée (en cas de capteur défaillant par exemple), le niveau « 2 » correspondrait à valeur finale estimée à partir du signal mesuré, correspondant à une qualité faible, le niveau « 3 » correspondrait à valeur calculée à partir du signal mesuré (par exemple une vitesse moyenne calculée à l'aide de coefficients prédéterminés multiplié à une vitesse maximale mesurée), correspondant à une qualité satisfaisante, conformes aux exigences du domaine d'application, et le niveau « 4 » correspondrait à une valeur directement mesurée (comme une vitesse moyenne directement issue des vitesses mesurées), correspondant à une qualité supérieure, la valeur mesurée étant déterminée dans des conditions optimales.

D'autres facteurs, comme des valeurs d'écart type, le rapport signal sur bruit, le nombre de points de mesure exploitables, la distribution des points de mesure, etc. peuvent être également pris en compte pour déterminer un indicateur de qualité du signal mesuré.

Ensuite, au cours d'une quatrième étape 104 (indiquée en traits tirés sur la figure 1), le premier signal réduit est traité par l'unité de traitement du signal 220. Ce traitement correspond à une réduction de l'information contenue dans le premier signal réduit, de manière à obtenir un second signal réduit.

Le second signal réduit correspond également à la valeur de mesure finale, qui est utilisée par l'utilisateur ou une machine.

Dans de nombreux cas, le second signal réduit est une valeur scalaire, par exemple dans le cas de mesures de vitesses, de distances, de pressions, etc.

Dans le cas où le procédé 100 ne comprend pas l'étape 102, c'est le signal de mesure brut est qui réduit au cours de la quatrième étape 104, de façon à obtenir un unique signal réduit.

Ainsi, pour résumer, le signal de mesure est soit réduit en un premier signal réduit et stocké directement dans la base de données 250, soit stocké directement dans la base de données 250, en étant associé à une information temporelle permettant de constituer un historique de mesure. A la suite d'un second (ou premier, selon les cas visés ci-dessus) traitement du signal, un second (ou premier, selon les cas visés ci-dessus) signal réduit est obtenu, qui correspond en général à un signal de mesure final, exploité par une machine ou un utilisateur.

Afin d'illustrer le procédé de la présente invention, deux cas d'application mettant en oeuvre ledit procédé vont être décrits par la suite.

### Premier cas d'application

Le premier cas d'application concerne un système d'assainissement urbain. En particulier, cet exemple concerne l'auto-surveillance des déversoirs d'orage.

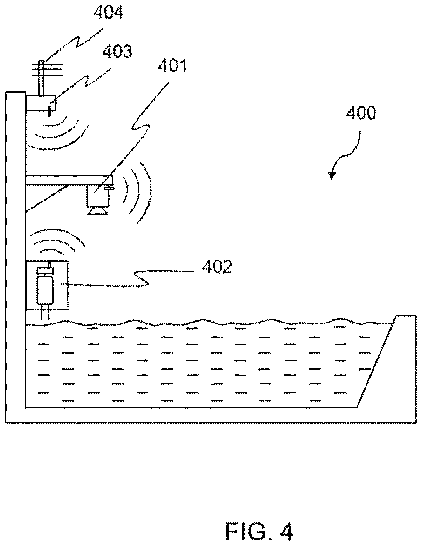

La figure 4 illustre un tel déversoir d'orage 400 instrumenté avec un capteur ultrasonore 401 pour la mesure de la hauteur d'eau (pouvant être substitués par des capteurs radar) et un capteur capacitif 402 pour la mesure de la surverse du déversoir (présence ou non de liquide à un niveau donné), étant avantageusement connectés sans fil à une unité de traitement centrale 403, et autonomes en énergie.

En particulier, l'unité de traitement centrale comporte un module de communication sans fil. Un tel module de communication peut être un module de type « GSM » (de l'anglais *Global System for Mobile Communications*), UMTS (de l'anglais *Universal Mobile Télécommunications System*), LTE (de l'anglais *Long Term Evolution*) ou encore 5G, ou tout standard, de manière à transmettre des données, notamment par messages de type « SMS » (de l'anglais *Short Message Service*) ou de données via le réseau internet, vers un utilisateur ou une centrale de supervision. Il est également possible qu'un tel module de communication sans fil soit un module capable de communiquer sur avec un réseau étendu à basse consommation (acronyme anglais LPWAN), adaptés pour la communication des objets connectés.

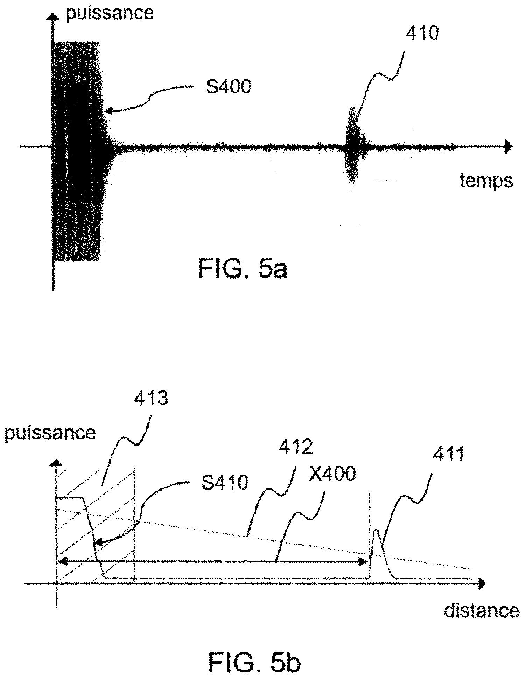

Concernant le type de capteur ultrasonore, un signal de mesure brut S400 est acquis, correspondant à la puissance (en watt ou équivalent) de l'écho des tirs ultrasons sur le temps, comme cela est visible sur le graphe de la figure 5a. Il est notamment visible sur ce graphe un pic 401 qui correspond à un écho renvoyé par un obstacle

Ce signal de mesure brut S400 est traité de façon à obtenir le graphe de l'enveloppe du signal S400, mais sur la distance et non plus le temps, par l'utilisation de la vitesse de propagation des ondes ultrasonores, qui est connue. Ce premier signal de mesure réduit S410 est représenté à la figure 5b. Il est visible un pic 411 correspondant au pic 401, mais dans une dimension spatiale et non plus temporelle. Ce premier signal de mesure réduit S410 est également complété par des valeurs caractéristiques dudit signal ou associées à la mesure, comme le front du pic 411, correspondant à la distance X400 de l'obstacle par rapport au capteur, le décrément de la puissance du tir dans l'espace 412, la zone d'exclusion de mesure 413 (échos trop proches du capteur), la température de mesure, ou tout autre valeur associée à la mesure.

Dans une seconde étape de traitement, le premier signal de mesure réduit 410 est traité de façon à obtenir un second signal de mesure réduit S420, destiné à être communiqué à un utilisateur ou à la centrale de supervision. Dans le cas du capteur ultrasonore, ce second signal réduit S420 est une valeur scalaire correspondant à la distance du capteur par rapport à la surface de l'eau dans le déversoir. Comme visible sur la figure 5c, le second signal réduit S420, qui est le signal de mesure final, correspond à la valeur X400 dans cet exemple.

Bien que le signal de mesure final S420 soit le signal utilisé pour la supervision du système, le premier signal de mesure réduit S410 est enregistré et stocké dans une mémoire de stockage non volatile afin de permettre une consultation a posteriori, de manière à interpréter une mesure finale qui paraitrait anormale, par exemple.

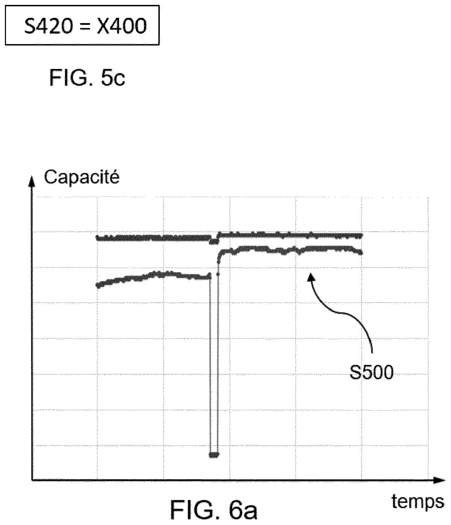

Concernant le second type de capteur, à savoir un capteur capacitif, ne faisant pas partie de l'invention revendiquée, dont le fonctionnement global a été explicité plus en amont, un signal de mesure brut S500 est tout d'abord acquis par les deux détecteurs (antennes) capacitifs. Comme cela est visible sur la figure 6a, le signal brut de chaque détecteur, assimilable à un condensateur, est une valeur de capacité électrique (en farad ou équivalent) au cours du temps.

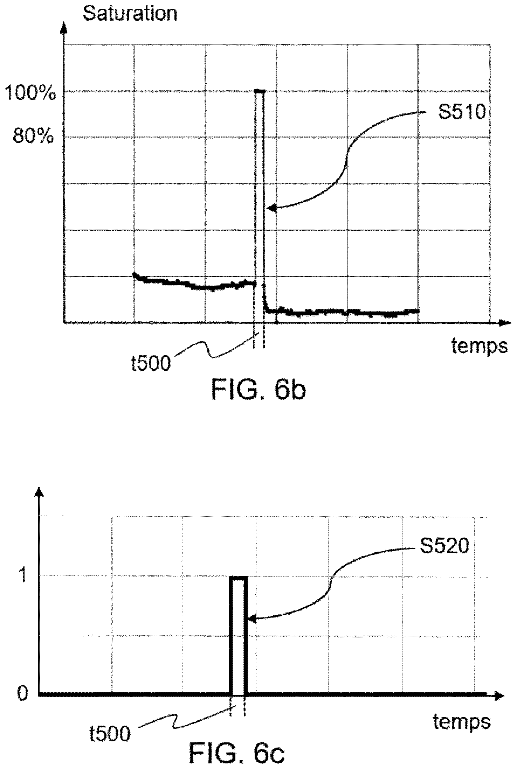

Dans une première étape de traitement du signal, le signal brut S500 est traité de manière à obtenir un premier signal de mesure réduit S510, qui est une saturation capacitive exprimée en pourcentage au cours du temps. Le traitement associé correspond à une auto-adaptation sur une gamme de valeurs minimales et maximales des capacités mesurées. Comme cela est visible sur la figure 6b, le signal S510 prend une valeur de saturation capacitive élevée lorsque l'antenne de référence et l'antenne de mesure présentent une grande différence de capacité. En particulier sur la plage de temps t500, la valeur de saturation capacitive est supérieure à un seuil déterminé, ce qui indique une présence d'eau au niveau de l'antenne de mesure. Un tel seuil est préférentiellement de l'ordre de 80%.

Dans une seconde étape de traitement, le premier signal réduit S510 est traité de manière à obtenir un second signal réduit S520, qui est ici une valeur pouvant prendre deux valeurs différentes au cours du temps, en particulier 0 et 1 (variable de type booléenne), de façon à indiquer la présence ou non d'une surverse. Le second signal de mesure réduit S520, représenté en figure 6c, prend la valeur 1 sur la plage temporelle t500, où une présence d'eau est détectée, et 0 le reste du temps.

De manière similaire au capteur à ultrason, le premier signal réduit S510 est stocké de manière à être consultable a posteriori pour interpréter les valeurs du second signal réduit S520, en cas de besoin.

### Second cas d'application

Le second cas d'application concerne un capteur à ultrasons ou piézoélectrique à effet Doppler dans un canal, une tuyauterie, ou similaire. Le capteur est immergé et située sur le fond du canal ou une paroi de la tuyauterie. Le capteur émet des ultrasons qui sont réfléchis par des particules (impuretés par exemple) et/ou des bulles d'air transportées par un fluide s'écoulant dans le canal ou tuyauterie.

Le déplacement des particules et/ou des bulles d'air est à l'origine du phénomène connu sous le nom « d'effet Doppler », qui consiste en une différence de fréquence de l'onde émise et de l'onde reçue après réflexion par un élément mobile. Cet effet permet de déduire la vitesse de l'élément mobile, et ici du fluide s'écoulant dans le canal ou la tuyauterie. La moyenne des vitesses des éléments mobiles est environ équivalent à la vitesse moyenne du fluide.

Ainsi, un signal de mesure brut est dans ce cas la puissance du signal reçu au cours du temps, étant la somme des échos renvoyés par chaque élément mobile dans le fluide.

Un premier traitement du signal permet d'obtenir un premier signal réduit. Ce second signal réduit est obtenu par exemple par un traitement de série de Fourrier, permettant d'obtenir l'amplitude et l'écart de phase pour chaque fréquence.

Chaque fréquence correspondant à une vitesse, selon l'effet Doppler, le graphe de la puissance (de l'amplitude) du signal sur la vitesse peut ainsi être obtenu en particulier.

Il est également possible d'exploiter ce signal réduit en le discrétisant, afin de fournir une représentation simplifiée en guise de signature. De cette manière, il est possible d'identifier la vitesse moyenne selon la distribution des mesures, ainsi que d'autres indicateurs statistiques tels que l'écart type de la vitesse moyenne, ou encore le rapport signal sur bruit.

Comme évoqué plus en amont, un indicateur de qualité peut également être stocké avec le premier signal réduit, cet indicateur prenant en compte, dans le cas présent, différents paramètres :
- niveau de qualité médiocre (valeur 1) lorsqu'une valeur de remplacement a été saisie (pas de mesure utilisable provenant du capteur) ;
- niveau de qualité faible (valeur 2) lorsque la vitesse moyenne est estimée à partir des vitesses brutes ;
- niveau de qualité moyen (valeur 3) lorsque la vitesse moyenne est calculée à partir de la vitesse maximale mesurée multipliée par un coefficient prédéterminé, ou bien lorsque la vitesse maximale est insérée dans une formule empirique ou déterminée expérimentalement, correspondant à un niveau de qualité répondant aux exigences de qualité du domaine technique considéré ;
- niveau de qualité élevé (valeur 4) lorsque la vitesse moyenne est calculée (et également accompagnée d'une valeur d'écart-type absolu pour des vitesse considérées comme faibles et relatif pour des vitesses considérées comme élevées). Préférentiellement, la vitesse moyenne calculée est également comparée à des valeurs usuelles, correspondant aux usages métrologiques associés au type de mesure. Si la valeur calculée est située dans un intervalle aux alentours desdites valeurs usuelles, alors la mesure peut être validée comme étant de qualité élevée (valeur 4), sinon elle se voit assigner une qualité moyenne (valeur 3)

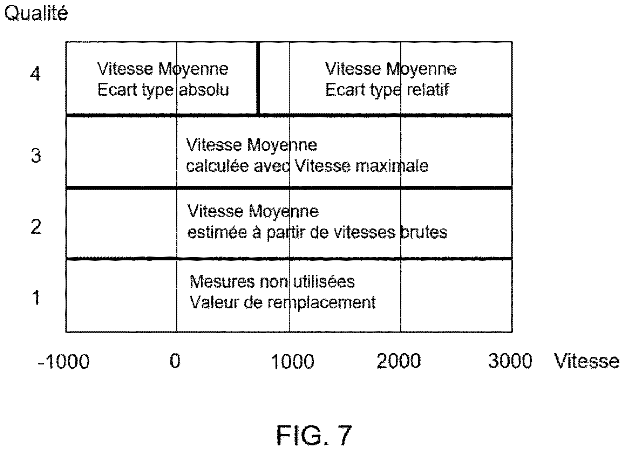

La figure 7 est un exemple d'une représentation du niveau de qualité associable à une valeur de vitesse moyenne, selon les critères définis ci-dessus.

Après un second traitement du premier signal de mesure réduit, associé à l'indicateur de qualité, un second signal réduit S600 est obtenu, et correspond ici à une valeur scalaire V600 de vitesse moyenne du fluide.

Comme pour le premier cas d'application, le stockage du premier signal de mesure réduit, et de l'indicateur de qualité, permet de vérifier la pertinence du signal de mesure final S640. En particulier, le premier signal de mesure réduit permet de vérifier la validité de l'indicateur de qualité, et donc de la méthode de détermination du signal de mesure final S640.

On comprend également aisément qu'un indicateur de qualité peut être construit et stocké à partir des données brutes ou semi-brutes d'un capteur tiers, de façon à apporter une valeur ajoutée par rapport au simple stockage de données du capteur tiers, et permettre une interprétation aisée, en particulier lorsque le capteur utilise des formats non usuels ou propriétaires.

Ainsi, le procédé objet de l'invention peut être mis en oeuvre partiellement, en coopération avec un dispositif de mesure tiers, en exécutant uniquement les étapes à partir desquelles l'information du capteur est accessible (les étapes d'acquisition du signal et/ou la première réduction du signal pouvant être effectuées par un procédé tiers, indépendamment et/ou différemment des étapes décrites dans la présente description).

Il apparaît donc clairement, à la lumière de ces deux cas d'application mettant en oeuvre trois capteurs différents à titre d'exemple, que le procédé objet de la présente invention, ainsi que le dispositif de mesure associé permettent une supervision beaucoup plus détaillée d'un système que ne le ferait un dispositif métrologique classique. Il apparaît également qu'il est beaucoup plus simple à l'aide de la présente invention de déterminer le type d'action (nettoyage, recalibrage, réétalonnage, remplacement, etc.) à effectuer sur un capteur présentant des valeurs de mesure anormales.

Il apparaît également que le procédé et le dispositif objet de la présente invention sont généralisables à tout type de capteur sur tout type de système, et que tout type de traitement du signal peut être appliqué sur le signal de mesure brut afin d'obtenir une signature numérique donc un premier signal de mesure réduit, puis sur le premier signal de mesure réduit afin d'obtenir un second signal de mesure réduit. Il est également clair que tout indicateur de qualité peut être construit par l'utilisateur du présent procédé et dispositif, de manière à correspondre à ses besoins propres.

## Revendications

1. Procédé (100) de traitement d'un signal de mesure d'une grandeur physique par une unité de traitement du signal (220) comprenant une horloge (221), **caractérisé en ce qu'**il comporte les étapes suivantes :
- acquisition (101) du signal de mesure au moyen d'un capteur (210) relié à ladite unité de traitement du signal, ledit signal de mesure étant représentatif d'une valeur de la grandeur physique mesurée, l'unité de traitement du signal (220) comprenant l'horloge (221), un capteur (210) et un moyen non volatil de stockage de l'information (250) reliés à ladite unité de traitement ;
- traitement (102) du signal de mesure, ledit traitement correspondant à une réduction d'une information contenue dans le signal de mesure, de manière à obtenir un premier signal réduit, ledit premier signal réduit représente une signature numérique du signal de mesure, ledit traitement (102) du signal de mesure pour obtenir la signature numérique comporte les sous étapes suivantes :
- échantillonnage du signal de mesure brut, soit une transformation d'un ou plusieurs signaux analogiques en un ou plusieurs signaux numériques ;
- filtrage numérique traitement du signal échantillonné à l'étape précédente pour garder les informations nécessaires et supprimer les éventuels bruits ;
- lissage des résultats du filtrage numérique pour obtenir un signal lissé ;
- sélection d'au moins une zone de mesure, avec une zone d'exclusion de mesure (413), identifiée par comparaison du signal lissé de l'étape précédente avec un signal issu d'une base de données ;
- stockage (103) dudit premier signal réduit traité par les sous étapes précédentes avec une information temporelle dans une base de données (250) et un calcul d'au moins un indicateur du niveau de qualité du signal stocké, ledit niveau étant déterminé par l'unité de traitement du signal (220) en fonction de caractéristiques du signal de mesure.

2. Procédé (100) selon la revendication 1, dans lequel l'étape de traitement (102) du signal de mesure est une étape de traitement de série de Fourrier, et /ou de détection de pics dans le signal de mesure.

3. Procédé (100) selon la revendication 1, dans lequel l'étape de traitement (102) du signal de mesure est une étape d'analyse statistique temporelle du signal de mesure.

4. Procédé (100) selon la revendication 1, dans lequel le calcul d'un ou des indicateurs de qualité est choisi parmi un rapport signal sur bruit, un pourcentage de saturation, une qualité d'un signal de vitesse.

5. Procédé (100) selon les revendications 1 à 4, dans lequel après l'étape de stockage (103), ledit procédé comporte en outre l'étape suivante :
- traitement (104) du premier signal réduit, ledit traitement correspondant à une réduction de l'information contenue dans ledit premier signal réduit, de manière à obtenir un second signal réduit.

6. Procédé (100) selon la revendication 5, dans lequel le second signal réduit est une valeur scalaire.

7. Procédé (100) selon la revendication 1, dans lequel à l'étape du filtrage, le filtrage numérique est adapté à chaque type de mesure choisi parmi un passe bande et un intégrateur.

8. Procédé (100) selon la revendication 1, dans lequel à l'étape du lissage, les techniques utilisées sont choisies parmi une interpolation linéaire, filtres de Chebyshev, Butterworth et une transformée de Hilbert.

9. Dispositif (200) de mesure d'une grandeur physique utile pour la mise en oeuvre d'un procédé selon l'une des revendications 1 à 8, dans lequel le capteur (210) est choisi parmi les groupes de capteurs piézoélectriques, ultrasoniques et radar, en particulier radar Doppler.

## Patentansprüche

1. Verfahren (100) zur Verarbeitung eines Meßsignals einer physikalischen Größe durch eine Signalverarbeitungseinheit (220) mit einer Uhr (221),
**dadurch gekennzeichnet, daß** es die folgenden Schritte aufweist:
- Erfassen (101) des Meßsignals mittels eines mit der Signalverarbeitungsvorrichtung verbundenen Sensors (210), wobei das Meßsignal für einen gemessenen Wert der physikalischen Größe steht, wobei die Signalverarbeitungseinheit (220) eine Uhr (221), einen Sensor (210) und ein nicht flüchtiges Mittel (250) zum Speichern der Information aufweist, die mit der Verarbeitungseinheit verbunden sind;
- Verarbeiten (102) des Meßsignals, wobei das Verarbeiten einer Reduzierung einer im Meßsignal enthaltenen Information entspricht, um ein erstes reduziertes Signal zu erhalten, wobei das erste reduzierte Signal eine digitale Signatur des Meßsignals darstellt, wobei das Verarbeiten (102) des Meßsignals zum Erhalten der digitalen Signatur die folgenden Unterschritte aufweist:
- Abtasten des Bruttomeßsignals, das heißt eine Umwandlung eines oder mehrerer analoger Signale in ein oder mehrere digitale Signale;
- digitale Verarbeitungsfilterung des im vorangehenden Schritt abgetasteten Signals, um die notwendigen Informationen zu behalten und eventuelle Geräusche zu unterdrücken;
- Glätten der Ergebnisse der digitalen Filterung, um ein geglättetes Signal zu erhalten,
- Auswählen mindestens einer Meßzone mit einer Meßausschlußzone (413), die durch Vergleich des geglätteten Signals des vorangehenden Schritts mit einem aus einer Datenbank stammenden Signal identifiziert wird;
- Speichern (103) des durch die vorangehenden Unterschritte verarbeiteten ersten reduzierten Signals mit einer Zeitinformation in einer Datenbank (250) und einer Berechnung mindestens eines Indikators des Qualitätsniveaus des gespeicherten Signals, wobei das Niveau durch die Signalverarbeitungseinheit (220) in Abhängigkeit von den Merkmalen des Meßsignals bestimmt wird.

2. Verfahren (100) gemäß Anspruch 1, wobei der Schritt (102) des Verarbeitens des Meßsignals ein Schritt des Verarbeitens als Fourier-Reihe und/oder des Suchens von Spitzen im Meßsignal ist.

3. Verfahren (100) gemäß Anspruch 1, wobei der Schritt (102) des Verarbeitens des Meßsignals ein Schritt der zeitlichen statistischen Analyse des Meßsignals ist.

4. Verfahren (100) gemäß Anspruch 1, wobei das Berechnen eines oder der Qualitätsindikatoren aus einem Signal-Rausch-Verhältnis, einem Prozentsatz der Sättigung, einer Qualität eines Geschwindigkeitssignals ausgewählt wird.

5. Verfahren (100) gemäß den Ansprüchen 1 bis 4, wobei das Verfahren nach dem Speicherschritt (103) außerdem den folgenden Schritt aufweist:
- Verarbeiten (104) des ersten reduzierten Signals, wobei die Verarbeitung einer Reduzierung der in dem ersten reduzierten Signal enthaltenen Information entspricht, um ein zweites reduziertes Signal zu erhalten.

6. Verfahren (100) gemäß Anspruch 5, wobei das zweite reduzierte Signal ein skalarer Wert ist.

7. Verfahren (100) gemäß Anspruch 1, wobei die digitale Filterung beim Filterungsschritt an jeden Messungstyp, ausgewählt aus einem Bandpaß und einem Integrator, angepaßt wird.

8. Verfahren (100) gemäß Anspruch 1, wobei die verwendeten Techniken beim Glättungsschritt aus einer linearen Interpolation, einem Tschebyscheff-Filter, einem Butterworth-Filter und einer Hilbert-Transformierten ausgewählt werden.

9. Vorrichtung (200) zum Messen einer physikalischen Größe, die für die Durchführung eines Verfahrens (100) gemäß einem der Ansprüche 1 bis 8 dienlich ist, wobei der Sensor (210) aus den Gruppen der piezoelektrischen Sensoren, der Ultraschallsensoren und Radarsensoren, insbesondere der Dopplerradarsensoren, ausgewählt ist.

## Claims

1. A method (100) for the processing of a physical quantity measurement signal by a signal processing unit (220) comprising a clock (221), **characterized in that** it includes the following steps:
- acquiring (101) the measurement signal by means of a sensor (210) connected to said signal processing unit, said measurement signal being representative of a value of the physical quantity measured, the signal processing unit (220) comprising the clock (221), a sensor (210) and a non-volatile information storage medium (250) connected to said processing unit ;
- processing (102) the measurement signal, said processing corresponding to a reduction of information contained in the measurement signal, so as to obtain a first reduced signal, said first reduced signal representing a digital signature of the measurement signal, wherein said processing (102) of the measurement signal to obtain the digital signature includes the following sub-steps:
- sampling the raw measurement signal, i.e. transforming one or more analog signals into one or more digital signals;
- digitally filtering the signal sampled at the preceding step to retain the necessary information and suppress any noise;
- smoothing the digital filtering results to obtain a smoothed signal;
- selecting at least one measurement area, with a measurement exclusion area (413), identified by comparing the smoothed signal of the preceding step with a signal coming from a database;
- storing (103) said first reduced signal processed by the preceding sub-steps with time information in a database (250) and calculating at least one indicator of the quality level of the stored signal, said level being determined by the signal processing unit (220) as a function of the characteristics of the measurement signal.

2. The method (100) according to claim 1, wherein the step (102) of processing the measurement signal is a step of Fourier series processing and/or detection of peaks in the measurement signal.

3. The method (100) according to claim 1, wherein the step (102) of processing the measurement signal is a step of temporal statistical analysis of the measurement signal.

4. The method (100) according to claim 1, wherein the calculation of one or more quality indicators is chosen among a signal/noise ratio, a saturation percentage, a quality of a speed signal.

5. The method (100) according to claims 1 to 4, wherein, after the storage step (103), said method further includes the following step:
- processing (104) the first reduced signal, said processing corresponding to a reduction of the information contained in said first reduced signal, so as to obtain a second reduced signal.

6. The method (100) according to claim 5, wherein the second reduced signal is a scalar value.

7. The method (100) according to claim 1, wherein, in the filtering step, the digital filtering is adapted to each type of measurement, chosen from a bandpass and an integrator.

8. The method (100) according to claim 1, wherein, in the smoothing step, the techniques used are chosen from linear interpolation, Chebyshev and Butterworth filters and a Hilbert transform.

9. A device (200) for measuring a physical quantity useful for implementing a method according to one of claims 1 to 8, wherein the sensor (210) is chosen among the groups of piezoelectric, ultra-sound and radar sensors, in particular Doppler radar.
